# EUROPÄISCHE PATENTSCHRIFT

(11) **EP 3 386 800 B1**
(45) Veröffentlichungstag und Bekanntmachung des Hinweises auf die Patenterteilung: **29.03.2023**
(21) Anmeldenummer: 16781449.0
(22) Anmeldetag: 13.10.2016
(51) Int. Cl.: B60Q 3/00, B60Q 3/80, B60K 37/06, B60Q 3/78, B60Q 3/74, B60K 35/00, B60R 16/037, G01C 21/36

(54) **VERFAHREN UND SYSTEM ZUM STEUERN EINER INNENRAUMBELEUCHTUNG IN EINEM FAHRZEUG**
METHOD AND SYSTEM FOR CONTROLLING AN INTERIOR LIGHTING IN A VEHICLE
PROCÉDÉ ET SYSTÈME DE COMMANDE D'UN ÉCLAIRAGE D'HABITACLE DANS UN VÉHICULE

(30) Priorität: 07.12.2015 DE 102015015717; 14.06.2016 DE 102016210512
(43) Veröffentlichungstag der Anmeldung: 17.10.2018
(73) Patentinhaber: Volkswagen Aktiengesellschaft, 38440 Wolfsburg (DE)
(72) Erfinder: KASSNER, Astrid, 10117 Berlin (DE); BARTHEL, Maximilian, 04416 Markkleeberg (DE); PARADA, Myriam, 10997 Berlin (DE); KLAAS, Michael, 38179 Schwülper (DE)
(86) Internationale Anmeldenummer: PCT/EP2016/074621
(87) Internationale Veröffentlichungsnummer: WO 2017/097471

(56) Entgegenhaltungen:
- EP-A1- 2 063 057
- DE-A1- 19 822 636
- DE-A1-102012 007 704
- US-A1- 2010 302 020
- US-A1- 2015 198 319

## Beschreibung

Die Erfindung betrifft ein Verfahren und ein System zum Steuern einer Innenraumbeleuchtung in einem Fahrzeug.

Im Innenraum moderner Fahrzeuge ist typischerweise eine Vielzahl von Beleuchtungsvorrichtungen vorgesehen, die wesentlich zur Gestaltung des Fahrzeuginnenraums beitragen, für eine gute Sichtbarkeit relevanter Bereiche sorgen und die Fahrt mit dem Fahrzeug für den Nutzer angenehm und sicher gestalten. Es wurden verschiedene Möglichkeiten vorgeschlagen, die Innenraumbeleuchtung einzustellen und an die Bedürfnisse des Nutzers anzupassen.

Bei dem in der DE 10 2012 007 704 A1 vorgeschlagenen Verfahren wird eine technische Funktionalität einer Fondausstattungskomponente eines Fahrzeugs eingestellt. Dazu können Einstellungen für Funktionalitäten an einem tragbaren Gerät eingegeben und an das Fahrzeug übertragen werden. Dabei können beispielsweise Einstellungen an Beleuchtungseinrichtungen oder Sitzen vorgenommen werden. Ferner können Einstellungen zu "Szenen" kombiniert werden.

Die DE 10 2012 025 619 A1 beschreibt ein Verfahren zur Steuerung einer Innenraumbeleuchtung in einem Fahrzeug, bei der eine dynamische Lichtverteilung nachgeahmt wird, wie sie etwa bei der Fahrt durch ein bewaldetes Gebiet zu beobachten ist. Dabei wird ein Bewegtlichtmuster erzeugt, indem mehrere Leuchtmittel zeitlich versetzt angesteuert werden. Durch den zeitlichen Versatz kann, etwa in Abhängigkeit von der Beschleunigung des Fahrzeugs in Längsrichtung beziehungsweise in Querrichtung, ein in Fahrzeuglängs- oder -querrichtung verlaufendes Lichtmuster erzeugt werden. Dadurch soll dem Fahrer ein Gefühl für die Geschwindigkeit des Fahrzeugs vermittelt werden, vergleichbar dem Lichtwechsel bei der Fahrt zwischen Bäumen.

Bei dem in der DE 10 2013 011 826 A1 beschriebenen Kraftfahrzeug wird der Fahrzustand des Fahrzeugs, beispielsweise eine Beschleunigung, erfasst und bewertet. Beispielsweise kann die Beschleunigung mit einem Maximalwert verglichen werden. Der so bestimmte Fahrzustandsbewertungsparameter wird mittels einer Beleuchtungseinrichtung kenntlich gemacht.

Die US 2015/0198319 A1 beschreibt ein Verfahren zum Steuern einer Innenraumbeleuchtung in einem Fahrzeug nach dem Oberbegriff des Anspruchs 1.

Die EP 2 063 057 A1 beschreibt ein Formteil für ein Fahrzeug mit einem Formkörper, der an einer Tür des Fahrzeugs vorgesehen ist, in dessen Endabschnitt ein lichtemittierender Körper angeordnet ist, um einen Insassen über einen Zustand der Tür zu informieren.

Die DE 198 22 636 A1 beschreibt eine Leuchtvorrichtung mit einer an der Fahrzeugtür eines Fahrzeugs vorgesehenen Türleuchte, bei der die Lichtquelle der Türleuchte hinter einer Wand einer Türverkleidung angeordnet ist. Dabei ist die Türleuchte im ausgeschalteten Zustand aufgrund ihres Dekors unsichtbar in die Türverkleidung integriert.

Der vorliegenden Erfindung liegt die Aufgabe zugrunde, ein Verfahren und ein System der eingangs genannten Art bereitzustellen, durch welche die Innenraumbeleuchtung als Bindeglied zwischen dem Erleben des Fahrzeugpassagiere und dem Betrieb des Fahrzeugs genutzt wird.

Erfindungsgemäß wird diese Aufgabe durch ein Verfahren mit den Merkmalen des Anspruchs 1 und ein System mit den Merkmalen des Anspruchs 7 gelöst. Vorteilhafte Ausgestaltungen und Weiterbildungen ergeben sich aus den abhängigen Ansprüchen.

Bei dem erfindungsgemäßen Verfahren der oben genannten Art wird eine Interaktion eines Nutzers mit einer Einrichtung des Fahrzeugs erfasst. Anhand der erfassten Interaktion wird ein Steuersignal erzeugt und an zumindest eine längliche Beleuchtungseinrichtung mit einer Vielzahl von Leuchtsegmenten übertragen. Dies geschieht so, dass ein dynamischer Lichteffekt erzeugt wird, wobei eine zeitlich veränderliche Verteilung eines Beleuchtungsparameters der Leuchtsegmente erzeugt wird.

Dadurch wird die Innenraumbeleuchtung vorteilhafterweise genutzt, um eine leicht erfassbare Rückmeldung über eine Interaktion des Nutzers mit der Einrichtung zu geben und die Verbindung zwischen den Fahrzeugpassagieren und der Einrichtung des Fahrzeugs deutlich zu machen.

Die "Einrichtung des Fahrzeugs" ist im Sinne der Erfindung im Fahrzeug integriert, also beispielsweise fest verbaut. Allerdings kann eine solche Einheit auch eine Schnittstelle des Fahrzeugs zu einer weiteren Einrichtung umfassen, beispielsweise zu einem Nutzergerät, etwa einem Mobiltelefon, Tablet-Computer oder ähnlichen Einrichtungen. Diese können mittels der Schnittstelle, insbesondere trennbar, mit dem Fahrzeug verbunden sein. Eine Interaktion mit diesen weiteren Einrichtungen kann mittels der Schnittstelle erfasst werden und als Interaktion mit einer Einrichtung des Fahrzeugs verarbeitet werden.

Die längliche Beleuchtungseinrichtung des Fahrzeugs kann beispielsweise eine LED-Leiste sein, die eine Vielzahl von LEDs (*light emitting diodes,* Leuchtdioden) umfasst. "Länglich" bedeutet im Sinne der Erfindung, dass die Beleuchtungseinrichtung, insbesondere der lichtemittierende Bereich der Beleuchtungseinrichtung, eine Längserstreckung aufweist, die groß gegenüber einer weiteren Erstreckung der Beleuchtungseinrichtung in eine andere Richtung ist. Die längliche Beleuchtungseinrichtung kann direkt sichtbar sein oder sie kann indirekt sichtbar sein, etwa wenn sie durch ein weiteres Bauteil verdeckt wird und eine Lichtemission erzeugt, die hinter diesem vorscheint. Insbesondere können die einzelnen Leuchtsegmente sichtbar und voneinander unterscheidbar sein oder sie können als durchgehendes oder zumindest durchgehend erscheinende Beleuchtungseinrichtung gebildet sein. Dabei können die Leuchtsegmente etwa von einzelnen Lichtquellen, etwa LEDs, oder Gruppen von Lichtquellen gebildet werden.

Derartige Beleuchtungseinrichtungen können insbesondere eine Ambientebeleuchtung bilden oder Teil einer solchen sein. Unter einer "Ambientebeleuchtung" wird im Sinne der Erfindung eine Beleuchtungsanlage für den Innenraum eines Fahrzeugs verstanden, die nicht einer direkten Beleuchtung dient, im Gegensatz etwa zu einer Leselampe zum direkten hellen Ausleuchten eines Bereichs im Innenraum. Beispielsweise kann eine Ambientebeleuchtung eine oder mehrere leuchtende Lichtleisten, insbesondere LED-Leisten, umfassen, die komplett oder teilweise umgehend im Fahrzeuginnenraum angeordnet sein können. Diese können direkt sichtbar sein oder lediglich indirekt, wenn ihre Lichtemission sichtbar ist, während die Lichtleiste selbst nicht direkt einsehbar ist.

Ferner kann eine LED-Matrix umfasst sein, etwa in einem Bereich in der Nähe einer Einrichtung des Fahrzeugs im Innenraum, zum Beispiel bei einem Ausströmer einer Belüftungsanlage, einer Kamera oder einer Tür. Eine LED-Matrix umfasst dabei in einer Matrix, also etwa in Reihen und Spalten, angeordnete einzelne LEDs oder andere Beleuchtungselemente. Die Beleuchtungselemente können in einer feinen oder groben Matrix, das heißt in größerer oder geringerer Dichte, angeordnet sein. Die Matrix erstreckt sich über eine Fläche und die einzelnen Beleuchtungselemente können einzeln unterscheidbar wahrnehmbar sein oder eine Lichtverteilung bilden, welche die Unterscheidung der einzelnen Beleuchtungselemente nicht erlaubt, etwa mittels einer Streuscheibe.

Ferner können Lichtpunkte umfasst sein, etwa im Sinne sogenannter Spots, die beispielsweise im Dachhimmel angeordnet sein können. Zum Beispiel können derartige Spots in einem Bereich oberhalb einzelner Sitze im Fahrzeug angeordnet sein. Ferner kann eine Ambientebeleuchtung eine Displaybeleuchtung umfassen, wobei diese von hinter einem Display nicht sichtbar verbauten Lichtquellen, insbesondere LEDs, erzeugt wird und nach Art einer Hintergrundbeleuchtung für das Display wirkt.

Bei dem erfindungsgemäß erzeugten dynamischen Lichteffekt wird ein Parameter der Beleuchtung mittels der Leuchtsegmente zeitlich verändert, beispielsweise ändern sich mit der Zeit die Intensität und/oder Farbe des emittierten Lichts. Ferner kann diese Veränderung nicht nur auf die einzelnen Leuchtsegmente bezogen sein, sondern in einer für die von den Leuchtsegmenten gebildete Beleuchtungseinrichtung in koordinierter Weise vorgenommen werden. Beispielsweise kann dies nach Art eines Videos erfolgen, wobei einzelne Leuchtsegmente als einzelne Bildelemente (*picture elements,* Pixel) behandelt werden, es kann ein Dimmen der gesamten Beleuchtungseinrichtung oder einzelner Leuchtsegmente vorgenommen werden oder es kann ein Bewegungspuls, insbesondere entlang einer Längserstreckungsrichtung der länglichen Beleuchtungseinrichtung, dargestellt werden.

Insbesondere können die Leuchtsegmente entlang einer Längsausdehnung der länglichen Beleuchtungseinrichtung im Wesentlichen nebeneinander angeordnet sein. Der dynamische Lichteffekt kann dann dadurch erzeugt werden, dass der Beleuchtungsparameter entlang der Längsausdehnung ausgehend von einer ersten Position hin zu zumindest einer zweiten Position verändert wird.

Gemäß einer Weiterbildung des erfindungsgemäßen Verfahrens umfasst die Einrichtung des Fahrzeugs einen Einstiegssensor, eine Identifikationsvorrichtung, eine Eingabeeinheit, eine Kamera, eine Belüftungseinheit, eine Anzeigeeinheit und/oder eine Netzwerkschnittstelle. So können vorteilhafterweise Rückmeldungen zu Interaktion des Nutzers mit besonders relevanten Einrichtungen des Fahrzeugs dargestellt werden.

Beispielsweise kann die Einrichtung ferner eine Sitzmatte sein, durch welche die Belegung eines Sitzes und insbesondere ein Hinsetzten erfasst werden kann, eine Einrichtung zum Identifizieren des Fahrers oder eines Passagiers und/oder es kann die Tätigkeit eines Fahrzeugnetzwerks, insbesondere unter Berücksichtigung des Transfers von Daten mittels einer Netzwerkschnittstelle, berücksichtigt werden.

Das Identifizieren des Fahrers oder eines Passagiers kann dabei auf an sich bekannte Art erfolgen, insbesondere mittels manuell eingegebener oder automatisch erfasster Daten, die Aufschluss über die Identität der Person geben. Zum Beispiel können mobile Nutzergeräte genutzt werden, etwa ein Mobiltelefon, ein Tablet- oder sonstiger tragbarer Computer oder eine Identifikationsvorrichtung des Fahrers oder Passagiers. In Abhängigkeit von der Identifikation können etwa personalisierte Einstellungen angewandt werden.

Insbesondere können mittels der Fahrzeugschnittstelle Nutzergeräte, etwa Mobilgeräte wie ein Mobiltelefon, Tablet-Computer oder ein vergleichbares Nutzergerät, in das Fahrzeugnetzwerk integriert werden. Zudem kann die Einrichtung des Fahrzeugs eine Gestenerfassungseinrichtung umfassen, mittels derer Gesten für eine Gestensteuerung erfassbar sind. Ferner können Sensoren umfasst sein, die etwa Daten über den Öffnungszustand einer Tür erfassen.

Ferner kann der Nutzer bei der Interaktion mit einer Eingabeeinheit verschiedene Eingaben tätigen und dabei mit der Einrichtung interagieren, insbesondere kann er Einstellungen vornehmen. Ferner kann die Einrichtung eine Kamera umfassen, die beispielsweise fest im Fahrzeug eingebaut sein kann. Des Weiteren kann die Einrichtung eine Belüftungseinheit umfassen, etwa eine Komponente einer Klimaanlage, beispielsweise einen Ausströmer. Ferner kann eine Anzeigeeinheit vorgesehen sein, die ebenfalls als Einrichtung im Sinne der Erfindung verwendet werden kann.

Erfindungsgemäß umfasst der dynamische Lichteffekt eine Inhomogenität der Verteilung des Beleuchtungsparameters der Leuchtsegmente, wobei der Inhomogenität zumindest ein Ort im Fahrzeug zugeordnet ist. Dadurch kann vorteilhafterweise der dynamische Lichteffekt anhand einer leicht erfassbaren Eigenschaft der Innenraumbeleuchtung erzeugt werden.

Beispielsweise kann die Inhomogenität als Lichtpuls oder lokales Intensitätsmaximum dargestellt werden, ferner kann ein Puls anhand eines Farbgradienten dargestellt werden. Ferner kann ein Gradient einer Intensität und/oder Farbe dargestellt werden, insbesondere als mehr oder weniger deutlich definierter Übergangsbereich. Beispielsweise kann eine Stufe oder ein ausgedehnter Übergang für den Parameter in Richtung der Längsausdehnung der länglichen Beleuchtungseinrichtung dargestellt werden. Dabei ist der Inhomogenität ein Ort zugeordnet, beispielsweise der Ort des lokalen Intensitätsmaximums oder des Übergangsbereichs.

Gemäß einer weiteren Ausbildung wird der dynamische Lichteffekt dadurch erzeugt, dass ein Lichtparameter des von den Lichtquellen emittierten Lichts von einzelnen benachbart zueinander angeordneten Lichtquellen oder von Gruppen von Lichtquellen, die benachbart zueinander angeordneten sind, nacheinander verändert wird. Dies erlaubt eine besonders einfache Bildung und Gestaltung des dynamischen Lichteffekts.

Erfindungsgemäß wird anhand der erfassten Interaktion zumindest eine Effekt-Position im Fahrzeug bestimmt und der erzeugte dynamische Lichteffekt umfasst eine gerichtete Bewegung der Inhomogenität entlang einer Längserstreckung der Beleuchtungseinrichtung bezüglich der Effekt-Position. Dadurch kann vorteilhafterweise eine bestimmte Position im Fahrzeug durch die Inhomogenität und/oder den dynamischen Lichteffekt ausgezeichnet werden.

Als Inhomogenität im Sinne der Erfindung wird ein durch einen Gradienten des Beleuchtungsparameters gekennzeichneter Bereich bezeichnet. Der Gradient verläuft dabei insbesondere in Richtung der Längsausdehnung der länglichen Beleuchtungseinrichtung des Fahrzeugs. Beispielsweise kann dies als Lichtpuls ausgebildet sein, insbesondere als ein Maximum eines Beleuchtungsparameters wie der Intensität oder der Farbe, der sich entlang der Längsausdehnung bewegt. Ferner kann eine Ausbreitung eines Beleuchtungsparameters dargestellt werden, etwa bei einem Übergang von einer dunkleren zu einer helleren Innenraumbeleuchtung oder bei einem Farbwechsel, indem der neue Beleuchtungsparameter nacheinander auf nebeneinander angeordnete Beleuchtungssegmente angewandt wird und auf diese Weise eine Ausbreitung entlang der Längserstreckung erzeugt wird.

Dabei kann die Effekt-Position beispielsweise einen Start- oder Endpunkt des dynamischen Lichteffekts bezeichnen. Insbesondere kann etwa ein Display im Fahrzeug als Effekt-Position bestimmt werden, etwa ein Display eines Kombiinstruments, eines Mitteldisplays, eines Displays, das einem Passagiersitz zugeordnet ist, oder ein gemeinsames Display. Ferner kann ein Ort im Fahrzeug als symbolischer Ort für eine Einrichtung oder Funktionalität des Fahrzeugs verwendet werden. Beispielsweise kann ein gemeinsames Display, auf dem eine zentrale Oberfläche zur Ausgabe von Informationen und/oder zur Bedienung gemeinsamer Funktionen dargestellt wird, als physischer Ort den dargestellten Funktionalitäten zugeordnet werden. Wenn beispielsweise eine gemeinsame Abspielliste für Medieninhalte auf einem gemeinsamen Display angezeigt wird, dann können Funktionalitäten im Zusammenhang mit dieser Medienverwaltung auch mit dem Display als physischem Ort verknüpft werden.

Bei einer weiteren Ausbildung wird die Effekt-Position anhand der Einrichtung bestimmt, mit welcher die Interaktion des Nutzers erfasst wurde. Dies erlaubt vorteilhafterweise eine deutliche und leicht erfassbare Verknüpfung des dynamischen Lichteffekts mit der Einrichtung, mit der eine Interaktion des Nutzers erfasst wurde.

Beispielsweise kann als Start-Position für einen Lichteffekt, wie etwa einen Lichtpuls, ein Display verwendet werden, mit dem der Nutzer interagiert. Ferner kann bei einer Interaktion mit einer Sitzmatte die Position des zugeordneten Sitzes verwendet werden. Ferner kann die Position einer Tür verwendet werden.

Erfindungsgemäß wird, wenn die Interaktion ferner zumindest eine weitere Einrichtung des Fahrzeugs betrifft, anhand der weiteren Einrichtung eine weitere Effekt-Position bestimmt. Ferner verläuft die gerichtete Bewegung des Lichtimpulses erfindungsgemäß von der Effekt-Position zu der weiteren Effekt-Position. Dadurch kann der dynamische Lichteffekt vorteilhafterweise verwendet werden, um eine Beziehung zwischen zwei Positionen im Fahrzeug darzustellen.

Beispielsweise kann sich ein Lichtpuls von einer bestimmten Startposition zu einer bestimmten Zielposition bewegen. Dadurch kann eine Bewegung oder andere Dynamik, etwa der Verlauf eines Datentransfers von einer Einrichtung zu einer anderen, dargestellt werden. Ferner kann beispielsweise eine Bewegung eines Elements einer Einrichtung von einer Position zu einer anderen dargestellt werden, etwa beim Öffnen und Schließen einer Tür.

Ferner kann eine Dynamik zwischen verschiedenen Passagieren dargestellt werden, etwa bei einer Interaktion zweier Personen in dem Fahrzeug, wobei die Effekt-Position so bestimmt werden kann, dass der dynamische Lichteffekt zwischen den Sitzpositionen der Personen gebildet wird. Zum Beispiel kann dadurch dargestellt werden, dass Daten von einer Person zur anderen, beziehungsweise von einem der einen Person zugeordneten Gerät zu einem der anderen Person zugeordneten Gerät, überragen werden. In analoger Weise kann etwa die Übertragung von Daten und/oder elektronischen Anweisungen von einer Person an eine Einrichtung des Fahrzeugs, etwa an ein gemeinsames Display zur Darstellung einer bestimmten Funktionalität, dargestellt werden. Beispielsweise kann das Verschieben eines Medieninhalts zu einer gemeinsamen Abspielliste als bewegter Impuls von einem Nutzer hin zu einem gemeinsamen Display dargestellt werden, auch wenn der tatsächliche physische Übertragungsweg anders verläuft und die so dargestellte Bewegung ihn lediglich symbolisch darstellt.

Bei einer Weiterbildung umfasst die gerichtete Bewegung eine von der Effekt-Position ausgehende, räumliche Ausbreitung des Beleuchtungsparameters entlang der Längserstreckung der Beleuchtungseinrichtung. Dadurch kann vorteilhafterweise eine Ausbreitung eines Effekts bezüglich des Innenraums des Fahrzeugs dargestellt werden. Beispielsweise kann sich eine Veränderung der Intensität der Lichtemission entlang der Längserstreckung verbreiten. In ähnlicher Weise kann auch ein Farbübergang oder eine Veränderung eines weiteren Beleuchtungsparameters erzeugt werden.

Bei einer Ausbildung der Erfindung wird dem Nutzer ein Farbstil zugeordnet und der dynamische Lichteffekt wird ferner in Abhängigkeit von dem Farbstil des Nutzers erzeugt. Dies erlaubt vorteilhafterweise eine Personalisierung in Abhängigkeit von einem Farbstil des Nutzers.

Der erfindungsgemäße "Farbstil" umfasst insbesondere eine Farbe oder eine Kombination mehrerer Farben, die gleichzeitig oder in einer Folge eine Gesamtheit einer farblichen Gestaltung bilden. Die Zuordnung des Farbstil zu einem Nutzer kann dabei auf verschiedene Weise erfolgen. Beispielsweise kann eine Eingabe des Nutzers erfasst werden, bei der er den Farbstil einstellt. Ferner kann die Auswahl anhand eines Nutzergeräts vorgenommen werden, wobei in diesem Fall eine datentechnische Verbindung zwischen dem Nutzergerät und dem Fahrzeug hergestellt werden muss, um den entsprechenden Parameter abzurufen und/oder zu übertragen. Dabei kann die Einstellung des Farbstils durch den Nutzer mittels einer expliziten Eingabe des Farbstils erfolgen, ferner kann auch eine automatische Bestimmung anhand anderer Parameter erfolgen, beispielweise mittels einer Auswertung von mit dem Nutzer assoziierten Daten, anhand derer ein Farbstil bestimmbar ist oder zum Beispiels Rückschlüsse auf Präferenzen des Nutzers möglich sind. Insbesondere geschieht dies im Zusammenspiel mit der oben beschriebenen Identifizierung des Nutzers.

Bei einer weiteren Ausbildung wird ferner anhand des Farbstils eine Sitzplatzbeleuchtung erzeugt, wobei die Sitzplatzbeleuchtung einem Sitzplatz des Nutzers zugeordnet ist. Dadurch kann vorteilhafterweise eine personalisierte Markierung des Sitzplatzes des Nutzers erfolgen. Insbesondere kann dies anhand eines Spots im Dachhimmel oberhalb des Sitzplatzes erfolgen. Dabei kann etwa mittels einer Sitzmatte detektiert werden, wann der Nutzer den Platz besetzt und die Identifikation des Nutzers kann auf verschiedene Weise erfolgen, etwa anhand eines Nutzergeräts.

Das erfindungsgemäße System zum Steuern einer Innenraumbeleuchtung in einem Fahrzeug umfasst zumindest eine längliche Beleuchtungseinrichtung mit einer Vielzahl von Leuchtsegmenten und eine Erfassungseinheit, durch die eine Interaktion eines Nutzers mit einer Einrichtung des Fahrzeugs erfassbar ist. Es umfasst ferner eine Steuereinheit, durch die anhand der erfassten Interaktion ein Steuersignal erzeugbar und an die zumindest eine längliche Beleuchtungseinrichtung übertragbar ist, sodass ein dynamischer Lichteffekt erzeugbar ist, wobei eine zeitlich veränderliche Verteilung eines Beleuchtungsparameters der Leuchtsegmente erzeugbar ist. Der dynamische Lichteffekt umfasst eine Inhomogenität der Verteilung des Beleuchtungsparameters der Leuchtsegmente, wobei der Inhomogenität zumindest ein Ort im Fahrzeug zugeordnet ist. Anhand der erfassten Interaktion ist zumindest eine Effekt-Position im Fahrzeug bestimmbar ist, wenn die Interaktion ferner zumindest eine weitere Einrichtung des Fahrzeugs betrifft, ist anhand der weiteren Einrichtung eine weitere Effekt-Position bestimmbar und der erzeugte dynamische Lichteffekt umfasst eine gerichtete Bewegung der Inhomogenität entlang einer Längserstreckung der Beleuchtungseinrichtung bezüglich der Effekt-Position, wobei die gerichtete Bewegung eines Lichtimpulses von der Effekt-Position zu der weiteren Effekt-Position verläuft.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Die Erfindung wird nun anhand von Ausführungsbeispielen mit Bezug zu den Zeichnungen erläutert.
- Figur 1: zeigt ein Ausführungsbeispiel des erfindungsgemäßen Systems,
- Figuren 2A und 2B: zeigen ein Ausführungsbeispiel der Verortung einer Ambientebeleuchtung in einem Fahrzeug,
- Figuren 3A, 3B und 3C: zeigen ein weiteres Ausführungsbeispiel der Verortung der Ambientebeleuchtung,
- Figuren 4A und 4B: zeigen ein Ausführungsbeispiel einer Willkommensinszenierung für den Fahrer des Fahrzeugs,
- Figur 5: zeigt ein Ausführungsbeispiel einer Willkommensinszenierung für Fahrzeugpassagiere,
- Figur 6: zeigt ein Ausführungsbeispiel zum Wählen eines Lichtmodus durch den Fahrer,
- Figuren 7A und 7B: zeigen Ausführungsbeispiele einer Darstellung des Sendens von Daten innerhalb des Fahrzeugs,
- Figur 8: zeigt ein Ausführungsbeispiel einer Erkundung in dem Innenraum mittels Gesten,
- Figur 9: zeigt ein Ausführungsbeispiel einer Gesteninteraktion in dem Fahrzeug, insbesondere zum Einstellen des Klimas,
- Figur 10: zeigt ein Ausführungsbeispiel einer Gesteninteraktion in dem Fahrzeug, insbesondere zum Öffnen und Schließen einer Tür,
- Figur 11: zeigt ein Ausführungsbeispiel einer Aufnahme eines Stimmungsbilds mittels Tablet-Computer,
- Figur 12: zeigt ein Ausführungsbeispiel einer Gesteninteraktion in dem Fahrzeug, insbesondere eine Aufnahme eines Stimmungsbildes und
- Figur 13: zeigt ein Ausführungsbeispiel einer Steuerung der Ambientebeleuchtung beim Erreichen eines Ziels sowie einer automatischen Anpassung der Ambientebeleuchtung an die Umgebung.

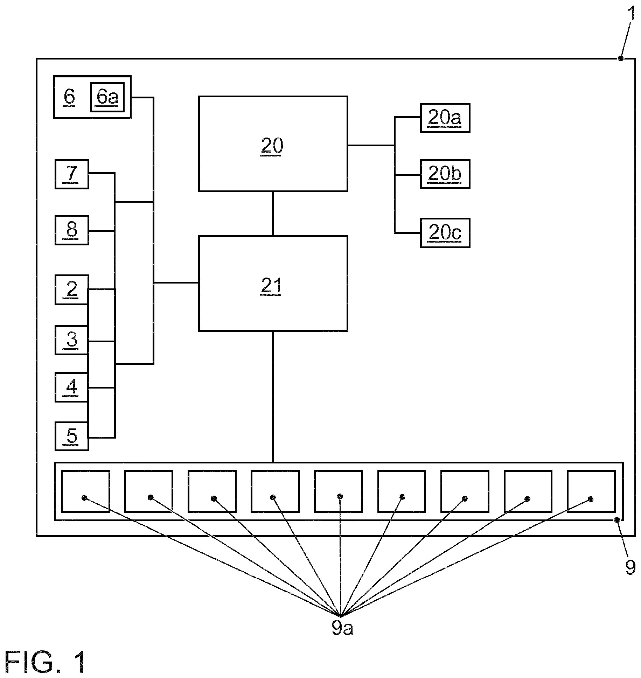

Mit Bezug zu Figur 1 wird ein Ausführungsbeispiel des erfindungsgemäßen Systems erläutert.

Ein Fahrzeug 1 umfasst eine Beleuchtungseinrichtung 9 mit Leuchtsegmenten 9a. Die Beleuchtungseinrichtung ist länglich ausgebildet, das heißt, sie weist eine Längserstreckung auf, die größer ist als die Erstreckung in die übrigen Richtungen. Insbesondere sind die Leuchtsegmente 9a nebeneinander in einer Reihe entlang der Längserstreckungsrichtung der Beleuchtungseinrichtung 9 angeordnet. Die Beleuchtungseinrichtung 9 ist so im Fahrzeug 1 angeordnet, dass eine durch die Leuchtsegmente 9a erzeugte Lichtemission im Innenraum des Fahrzeugs 1 direkt oder indirekt sichtbar ist. In dem dargestellten Ausführungsbeispiel ist dabei eine Streuscheibe so über den Leuchtsegmenten 9a angeordnet, dass die einzelnen Leuchtsegmente 9a für einen Nutzer nicht direkt sichtbar sind, sondern die Lichtemission über eine Fläche der Streuscheibe verteilt wird. Die Beleuchtungseinrichtung 9 kann ferner von einem weiteren Bauelement im Innenraum des Fahrzeugs 1 verdeckt sein, sodass das von ihr emittierte Licht dahinter vorscheint und für einen Nutzer im Innenraum lediglich indirekt sichtbar ist.

Mit der Beleuchtungseinrichtung 9 ist eine Steuereinheit 21 gekoppelt, die wiederum mit einer Erfassungseinheit 20 gekoppelt ist. Die Erfassungseinheit 20 ist in dem Ausführungsbeispiel mit einer Sitzmatte 20a, einem Türsensor 20b und einer Netzwerkschnittstelle 20c gekoppelt. In dem Ausführungsbeispiel ist mittels der Netzwerkschnittstelle 20c eine Verbindung zu weiteren Einrichtungen herstellbar, insbesondere zu mobilen Nutzergeräten (nicht dargestellt). Alternativ oder zusätzlich können weitere Einrichtungen und Sensoren des Fahrzeugs 1 vorgesehen und mit der Erfassungseinheit 20 gekoppelt sein.

Mit der Steuereinheit 21 sind ferner eine LED-Matrix 7 für eine Kamera und eine LED-Matrix 8 für einen Ausströmer sowie vier Spots 2, 3, 4, 5 gekoppelt. Ferner ist mit der Steuereinheit 21 ein Display 6 gekoppelt, das eine LED-Hintergrundbeleuchtung 6a umfasst. Die LED-Hintergrundbeleuchtung 6a umfasst eine Vielzahl von LEDs, die eine Umgebung des Displays 6 im Innenraum indirekt beleuchten können.

Dabei bilden die Beleuchtungseinrichtung 9, die LED-Matrizen 7, 8 und die Spots 2, 3, 4, 5 und die LED-Hintergrundbeleuchtung 6a eine Ambientebeleuchtung des Fahrzeugs 1.

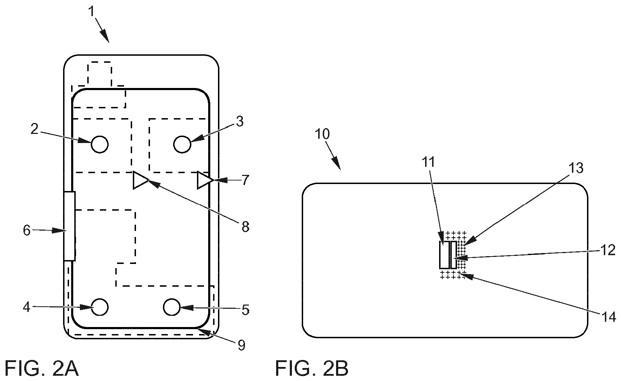

Mit Bezug zu den Figuren 2A und 2B wird ein Ausführungsbeispiel der Verortung eines Ambientelichts, da heißt einer Ambientebeleuchtung, im Fahrzeug 1 erläutert.

Dabei wird die Ausgangssituation der Hardware erläutert. Figur 2A zeigt eine Draufsicht des Innenraums des Fahrzeugs 1, wobei die Fahrerseite oben, in diesem Beispiel auf der linken Seite, und das Heck des Fahrzeugs 1 unten angeordnet sind. Wie in dem oben mit Bezug zu Figur 1 erläuterten Ausführungsbeispiel umfasst das System die folgenden Komponenten: Im Dachhimmel 10 sind vier Spots 2, 3, 4, 5 angeordnet. Dabei ist ein Spot 2 oberhalb des Fahrersitzes, ein Spot 3 oberhalb des Beifahrersitzes, ein Spot 4 oberhalb des Passagiersitzes links hinten und ein Spot 5 oberhalb des Passagiersitzes rechts hinten angeordnet. Im Fond des Fahrzeugs 1 ist ferner auf der linken Seite eine LED-Hintergrundbeleuchtung 6a des Displays 6 angeordnet. Dabei sind hinter dem gemeinsamen Display 6 im Fond des Fahrzeugs 1 LEDs nicht sichtbar verbaut. Ferner ist eine LED-Matrix 7 für eine Kamera sowie eine LED-Matrix 8 für einen Ausströmer im Dachhimmel 10 angeordnet. Es ist ferner gezeigt, dass eine komplett umgehende LED-Leiste 9 für eine direkte und/oder indirekte Beleuchtung vorgesehen ist. Insbesondere umfasst die Lichtleiste 9 zwei oder mehr einzelne LED-Leisten 9, die eine direkte und indirekte Lichtemission erzeugen. Die LED-Leiste 9 verläuft im Wesentlichen entlang des gesamten Umfangs des Innenraums des Fahrzeugs 1.

Figur 2B zeigt eine Ansicht des Dachhimmels im Innenraum des Fahrzeugs 1, wobei die Position einer Einrichtung 11, im dargestellten Fall eine Kamera 11 beziehungsweise ein Ausströmer 11, gezeigt ist, in deren direkter Umgebung eine weitere LED-Leiste 12 im Dachhimmel 10 angeordnet ist. Ferner sind in der Umgebung der Einrichtung 11 eine feine LED-Matrix 13 und eine grobe LED-Matrix 14 angeordnet. Die weitere LED-Leiste 12 ist länglich und kürzer als die LED-Leiste 9 ausgebildet, die entlang des Umfangs des Innenraums angeordnet ist.

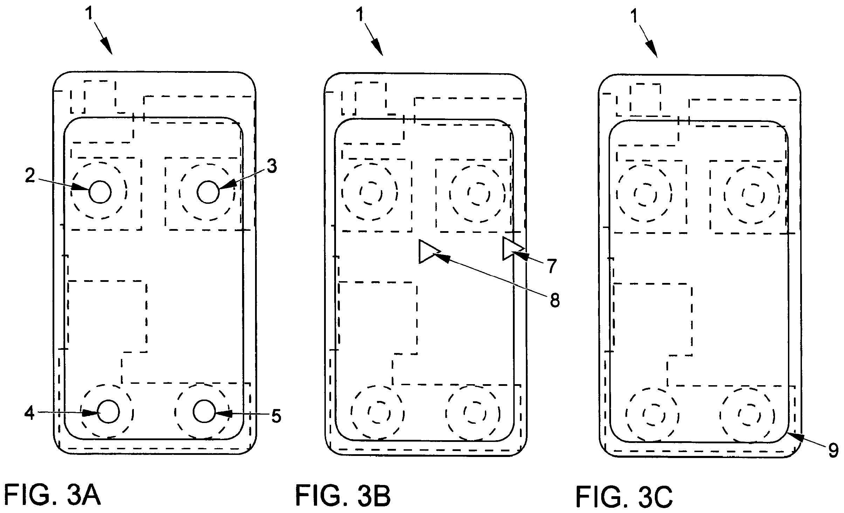

Mit Bezug zu den Figuren 3A, 3B und 3C wird die Verortung der Ambientebeleuchtung in Grundlagen erläutert.

Figur 3A zeigt die grundlegende Anordnung der vorgesehenen LED-Spots 2, 3, 4, 5 im Innenraum des Fahrzeugs 1. Dabei ist der LED-Spot 2 des Fahrers oberhalb des Fahrersitzes, der LED-Spot 3 des Beifahrers oberhalb des Beifahrersitzes und die LED-Spots 4, 5 der Passagiere oberhalb der Passagiersitze angeordnet. Insbesondere können die LED-Spots 2, 3, 4, 5 auch an anderen Stellen als am Dachhimmel 10 des Fahrzeugs 1 angeordnet sein, wobei allerdings ein klarer räumlicher Bezug zu dem zugeordneten Sitzplatz besteht.

Dabei ist vorgesehen, dass der jeweils persönliche Spot 2, 3, 4, 5 auf den jeweils dort sitzenden Passagier oder auf eine Interaktion mit dem Sitz, insbesondere eine dem jeweiligen Sitz zugeordnete Sitzmatte 20a, reagiert. Bei einem aktiven Nutzer ist dabei der Spot weiß gefärbt und zeigt an, wer agiert. Bei einem passiven Nutzer ist der Spot in dem Ausführungsbeispiel eingefärbt und das Fahrzeug "spricht" den Nutzer an.

Insbesondere wird auf diese Weise dargestellt, welche Rolle ein Nutzer im Fahrzeug 1 spielt, insbesondere ob er aktiv eine Interaktion betreibt oder ob er passiv an einer solchen Interaktion beteiligt ist. In diesem Ausführungsbeispiel ist etwa der persönliche LED-Spot 2, 3, 4, 5 eines Nutzers, der gerade eine Eingabe für ein Multimediagerät des Fahrzeugs 1 vornimmt, weiß gefärbt, während der Spot 2, 3, 4, 5 eines anderen Nutzers, für den gerade eine Benachrichtigung durch das Fahrzeug 1 ausgegeben wird, farbig eingefärbt ist.

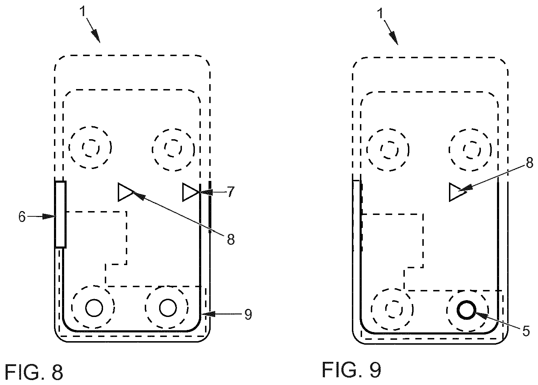

Die in Figur 3B dargestellten LED-Matrizen im Dachhimmel 10 des Innenraums des Fahrzeugs 1 reagieren auf Raumgesten, geben Feedback zur richtigen Bedienung und zeigen Bedienmöglichkeiten auf. Insbesondere sind in dem Ausführungsbeispiel die den LED-Matrizen 7, 8 zugeordneten Einrichtungen, hier eine Kamera und ein Ausströmer, mittels Raumgesten bedienbar. Die vorgesehene Steuerung der LED-Matrizen 7, 8 für die Gestensteuerung wird weiter unten mit Bezug zu Figur 8, 9 und 10 genauer erläutert.

Die in Figur 3C dargestellte LED-Leiste 9 beziehungsweise mehrere solcher LED-Leisten 9, verbindet Personen mit dem System beziehungsweise einer Schnittstelle zu dem System, leitet den Nutzer und gibt ein Feedback von Systemseite aus. Die beiden in dem Ausführungsbeispiel vorgesehenen Lichtleisten 9 (direkte und indirekte Lichtleiste 9) sind miteinander gekoppelt und verhalten sich gleich. Insbesondere sind die direkte und indirekte Lichtleiste 9 parallel zueinander angeordnet.

In dem dargestellten Ausführungsbeispiel verläuft die LED-Leiste 9 um den gesamten Umfang des Innenraums des Fahrzeugs 1 herum. Dies schließt nicht aus, dass die LED-Leiste 9 stellenweise unterbrochen ist, beispielsweise an der Position weiterer Einrichtungen, etwa einer Tür 15, einem Display 6, einem Kombiinstrument 16 oder anderen Einrichtungen des Fahrzeugs 1. Ferner kann in weiteren Ausführungsbeispielen vorgesehen sein, dass die LED-Leiste 9 nicht um das gesamte Fahrzeug 1 herum verläuft, sondern zum Beispiel nur im hinteren Bereich (Fond) des Fahrzeugs 1 oder im vorderen Bereich der Sitze des Fahrers und des Beifahrers.

In weiteren Ausführungsbeispielen können die beiden in dem Ausführungsbeispiel vorgesehenen Lichtleisten 9 (direkte und indirekte Lichtleiste 9) sich verschieden verhalten, zum Beispiel können verschiedene dynamische Lichteffekte hergestellt werden oder es kann ein Lichteffekt lediglich von einer der Lichtleisten 9 dargestellt werden. Ferner können mehrere Lichtleisten 9 vorgesehen sein und diese können in verschiedenen Bereichen des Fahrzeugs 1 angeordnet sein. Insbesondere können die LED-Leisten 9 dabei auch nicht parallel verlaufen.

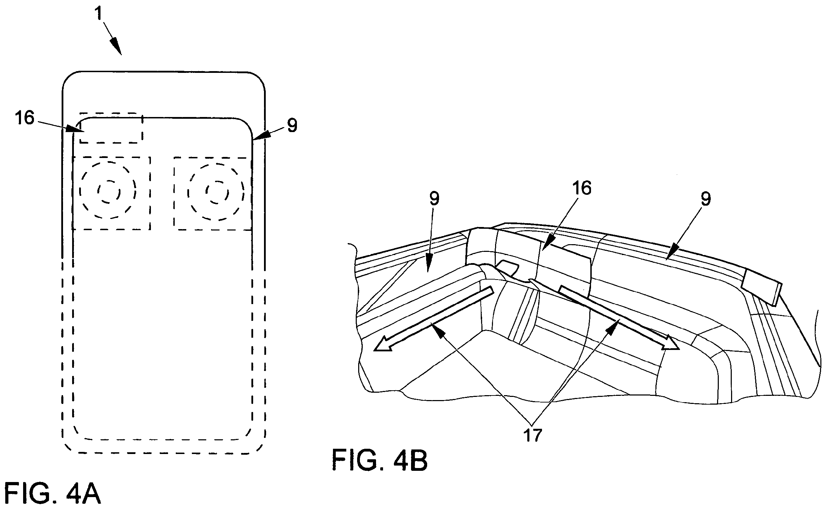

Mit Bezug zu den Figuren 4A und 4B wird ein Ausführungsbeispiel einer Willkommensinszenierung für den Fahrer des Fahrzeugs 1 erläutert.

Hierbei wird eine Funktion der Ambientebeleuchtung durch das Fahrzeug 1 und eine Person getriggert, das heißt ausgelöst. Die Willkommensinszenierung für den Fahrer wird ferner als "Welcome Fahrer" bezeichnet.

Das Konzept dieser Willkommensinszenierung sieht vor, dass die Inszenierung beim Setzen des Fahrers auf den Fahrersitz beginnt und dass dabei eine Ausbreitung des Lichts von einem frei programmierbaren Kombiinstrument 16 aus hin zu der Lichtleiste 9 ausgeführt wird. Dies geschieht im vorderen Bereich des Fahrzeugs 1. Figur 4B illustriert die Willkommensinszenierung näher, wobei durch die Pfeile 17 angedeutet wird, dass eine Ausbreitung eines Lichteffekts ausgehend von dem Kombiinstrument 16 entlang der Längsausdehnung der Lichtleiste 9 erfolgt.

Der Lichteffekt kann dabei eine Ausbreitung in verschiedener Weise erfassen, insbesondere kann ein Lichtimpuls, das heißt ein lokal begrenztes Intensitätsmaximum, sich entlang der Lichtleiste 9 bewegen oder es kann sich ein Gradient entlang der Lichtleiste 9 bewegen. Der Gradient kann dabei als stufenförmiger Verlauf einer Verteilung der Intensität oder eines anderen Beleuchtungsparameters dargestellt werden. Beispielsweise ist in einer Ausgangssituation die gesamte Lichtleiste dunkel, dann beginnt eine Beleuchtung höherer Intensität an der Position des Kombiinstruments 16 und eine Stufe der Intensitätsverteilung der Lichtemission bewegt sich entlang der Längserstreckung der Lichtleiste 9, beginnend am Rand des Kombiinstruments 16 beziehungsweise ausgehend von beiden seitlichen Rändern des Kombiinstruments 16.

Dabei kann die LED-Leiste 9 während der Fahrt im Vorderbereich des Fahrzeuginnenraums aktiv bleiben. Ferner können LED-Spots 2, 3 (siehe Figur 2A) in den dort sitzenden Personen zugeordneten persönlichen Farben aufleuchten.

Das Auslösen dieser Willkommensinszenierung geschieht durch das Fahrzeug 1 und den Fahrer.

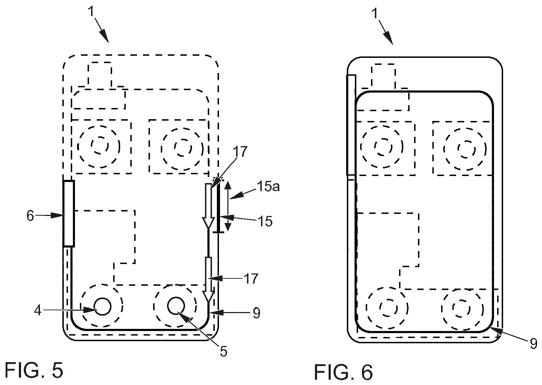

Mit Bezug zu Figur 5 wird ein Ausführungsbeispiel einer Willkommensinszenierung für Fahrzeugpassagiere erläutert.

Die Inszenierung wird auch als "Welcome Passagiere" bezeichnet. Die Funktion der Ambientebeleuchtung wird in diesem Fall durch das Fahrzeug 1 und eine Person getriggert, das heißt ausgelöst.

Bei dem Konzept ist vorgesehen, dass in einem ersten Schritt die LED-Leiste 9 beim Öffnen der Tür 15 startet. In einem zweiten Schritt wird ein Verlauf zum Display 6 mit der LED-Hintergrundbeleuchtung 6a durchgeführt, wobei die LEDs der LED-Hintergrundbeleuchtung 6a aufleuchten, wenn der Verlauf das Display 6 erreicht, und danach eine Welcome-Inszenierung auf dem Display 6 erscheint, wobei etwa ein Wechsel von einem Kamerabild zu einem Reiseerlebnis durchgeführt wird. In einem dritten Schritt leuchtet beim Sitzen des Passagiers auf einem Sitz der Spot 4, 5 über dem Passagier in der persönlichen Farbe auf.

Dabei kann vorgesehen sein, dass die Lichtleiste 9 während der Fahrt aktiv bleibt, das heißt, dass beispielsweise das gesamte Band der Lichtleiste 9 während der Fahrt leuchtet.

Diese Funktion der Ambientebeleuchtung wird durch das Fahrzeug 1 und die Passagiere getriggert.

Dabei wird der Nutzer in dem Ausführungsbeispiel identifiziert, indem eine datentechnische Verbindung hergestellt wird zwischen der Netzwerkschnittstelle 20c des Fahrzeugs 1 (nicht dargestellt) und einem Mobilgerät des Nutzers. Insbesondere erfolgt die Herstellung der Verbindung zu einem Mobiltelefon oder einem Tablet-Computer des Nutzers. Von dem Mobilgerät wird eine Einstellung für den Nutzer erfasst, die insbesondere die Lieblingsfarbe des Nutzers umfasst. Ferner kann ein Farbstil des Nutzers erfasst werden, welcher ferner eine Kombination mehrerer Farben erfassen kann. Ferner können weitere Daten des Nutzers erfasst werden, etwa sein Name und/oder weitere Information über den Nutzer. In weiteren Ausführungsbeispielen kann die Identifizierung auf andere, an sich bekannte Weisen erfolgen.

Insbesondere erfolgt beim Einsteigen ein Öffnen und/oder Schließen der Tür 15 durch Verschieben der Schiebetür 15 in eine Richtung des Doppelpfeils 15a, der die Türbewegung symbolisiert. Bei dem Verlauf der Lichtfunktion von der Position der Tür 15 hin zur Position des Displays 6 beziehungsweise der LED-Hintergrundbeleuchtung 6a kann der dynamische Lichteffekt auf verschiedene Weise erzeugt werden, insbesondere kann ein Lichtpuls sich entlang der LED-Leiste 9 bewegen oder ein Gradient kann eine Ausbreitung einer bestimmten Intensität entlang der LED-Leiste 9 erzeugen. Die Bewegungsrichtung des dynamischen Lichteffekts ist mittels der Pfeile 17 angedeutet. In dem Ausführungsbeispiel ist der dynamische Lichteffekt auf den hinteren Bereich des Fahrzeug 1 beschränkt, in weiteren Ausführungsbeispielen kann jedoch vorgesehen sein, dass der dynamische Lichteffekt in anderen Bereichen des Fahrzeugs beziehungsweise im gesamten Fahrzeug 1 angewandt wird und sich insbesondere auch in den vorderen Bereich bewegt.

Bei dem Ausführungsbeispiel ist vorgesehen, dass der Spot 4, 5 oberhalb des eingenommenen Sitzplatzes des Passagiers für eine bestimmte Zeit in der dem Nutzer zugeordneten Farbe aufleuchtet. Ferner kann der Sitzplatz dem einsteigenden Passagier mittels der Spots 2, 3, 4, 5 zugewiesen werden. Anschließend ist vorgesehen, dass der LED-Spot 4, 5 erlischt. In weiteren Ausführungsbeispielen kann vorgesehen sein, dass der LED-Spot 4, 5 dauerhaft aufleuchtet oder dass er nach einer bestimmten Zeit von einer Lichtemission in der Farbe des Nutzers in eine weiße Farbe, etwa in der Funktion einer Leselampe, übergeht.

Die Welcome-Inszenierung auf dem Display 6 kann in verschiedener Weise erfolgen, beispielsweise kann eine Willkommensnachricht angezeigt werden oder es kann ein bestimmtes Bild angezeigt werden.

Mit Bezug zu Figur 6 wird ein Ausführungsbeispiel zum Wählen eines Lichtmodus durch den Fahrer erläutert.

Dabei wird die genannte Funktionalität der Ambientebeleuchtung durch die Person des Fahrers getriggert.

Das Konzept sieht vor, dass in einem ersten Schritt der Fahrer eine Farbe auswählt, wobei ferner eine vorkonfigurierte Stimmung ausgewählt werden kann. Dabei umfasst eine "Stimmung" eine Kombination aus Farbe und Bewegung, zum Beispiel können die Stimmungen *"Lounge", "Family", "Party",* etc. vorgesehen sein. Ferner kann eine Koppelung an die Umwelt des Fahrzeugs 1 vorgesehen sein, wobei insbesondere Farben oder andere Parameter der Innenraumbeleuchtung anhand der Beschaffenheit des Außenraums in der Umgebung des Fahrzeugs 1 berücksichtigt werden. Beispielsweise können typische Farben der Umgebung des Fahrzeugs 1 erfasst und als Farben für die Ambientebeleuchtung verwendet werden.

In einem zweiten Schritt läuft das Licht vom Fahrer beginnend über die Leiste 9 nach hinten. Die Leiste 9 bleibt insbesondere aktiv.

Dabei besteht eine Anforderung an das System insbesondere darin, dass nicht zueinander passende Farben vermieden werden sollen und dass eine Abstimmung von Grundfarben und von persönlichen Farben, beispielsweise erfasst von einem Tablet-Computer des Nutzers, abgestimmt werden.

Das Triggern der Funktion erfolgt durch den Fahrer.

Insbesondere ist dabei in dem Ausführungsbeispiel vorgesehen, dass der Fahrer die Einstellung der Farbe und/oder Stimmung für die Ambientebeleuchtung mittels einer Eingabevorrichtung vornimmt. Beim Anwenden der Auswahl wird die gewählte Farbe beziehungsweise Stimmung auf die Ambientebeleuchtung angewandt und es wird durch einen dynamischen Lichteffekt eine Ausbreitung der neuen Einstellung entlang der LED-Leiste 9 dargestellt. Insbesondere beginnt diese Ausbreitung an einer der Eingabeeinrichtung zugeordneten Position, beispielsweise an einem Mitteldisplay im vorderen Bereich des Fahrzeugs 1 oder einem anderen Ort, an dem die entsprechende Eingabeeinrichtung vorgesehen ist. Beispielsweise kann die Ausbreitung von der Eingabeeinrichtung ausgehend nach beiden Seiten hin entlang der LED-Leiste 9 erfolgen oder die Ausbreitung kann in eine Richtung verlaufen. Dabei kann der Lichteffekt eine Ausbreitung im gesamten Fahrzeug 1 dadurch darstellen, dass der dynamische Lichteffekt sich über die gesamte Längserstreckung der LED-Leiste 9, das heißt um den gesamten Innenraum des Fahrzeugs 1 herum, ausbreitet.

In weiteren Ausführungsbeispielen kann die Ausbreitung auf einen anderen Bereich des Fahrzeugs 1 angewandt werden, beispielsweise kann die Ausbreitung lediglich im vorderen Teil des Fahrzeugs 1 dargestellt werden oder lediglich im hinteren Bereich des Fahrzeugs 1.

Als "Stimmung" für die Ambientebeleuchtung ist in dem Ausführungsbeispiel vorgesehen, dass eine dynamische Gestaltung der Ambientebeleuchtung angewandt wird. Beispielsweise können sich Farbe und/oder Intensität der Lichtemission der LED-Leiste 9 mit der Zeit verändern, wobei die gesamte LED-Leiste 9 eine homogene Lichtemission erzeugen kann, das heißt ein Beleuchtungsparameter der Lichtemission ist über die gesamte Längserstreckung der LED-Leiste 9 konstant, oder es kann eine auch räumlich inhomogene Verteilung des Beleuchtungsparameters erzeugt werden, das heißt entlang der Längserstreckung der LED-Leiste 9 können verschiedene Farben, Intensitäten oder Ähnliches dargestellt werden. Insbesondere kann eine Stimmung nach Art eines Videos erzeugt werden, wobei anstelle von Videobildern eine vorgegebene Abfolge von Lichtemissionen durch die Leuchtsegmente 9a als Bildelemente (*picture element,* Pixel) für das Video ausgegeben werden. Durch eine geeignete Auswahl von Farben, Intensitäten und der dynamischen Gestaltung der vorkonfigurierten Stimmung können verschiedene Effekte für eine bestimmte Stimmung im Fahrzeug 1 erzeugt werden, etwa ein anregender Effekt oder ein beruhigender Effekt auf Passagiere im Fahrzeug 1. Dabei kann die Stimmung insbesondere auf die gesamte Ambientebeleuchtung im Fahrzeug 1 angewandt werden, in weiteren Ausführungsbeispielen kann jedoch vorgesehen sein, dass die Stimmung auf einen Bereich im Innenraum des Fahrzeugs 1, beispielsweise auf den hinteren Bereich (Fond) des Fahrzeugs 1 beschränkt ist.

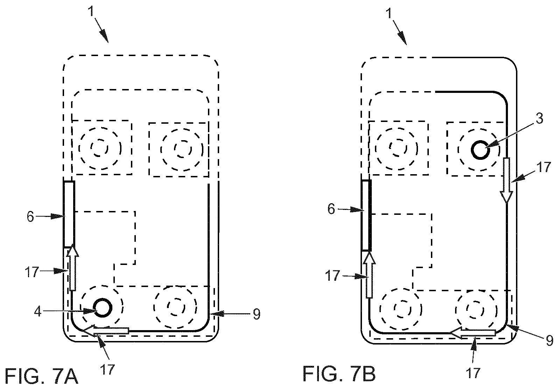

Mit Bezug zu den Figuren 7A und 7B werden Ausführungsbeispiele einer Darstellung des Sendens von Daten innerhalb des Fahrzeugs 1 erläutert.

Dabei ist das Senden von Daten von einem Tablet-Computer an ein Display vorgesehen. Bei dem Konzept reagiert in einem ersten Schritt beim Senden von Daten die Lichtleiste 9 beginnend beim Passagier bis zum Display 6. In einem zweiten Schritt leuchten die LEDs der LED-Hintergrundbeleuchtung 6a des Displays 6 auf.

Dabei kann vorgesehen sein, dass der persönliche Spot 2, 3, 4, 5 des sendenden Passagiers in Weiß aufleuchtet.

Das Triggern der Funktion erfolgt durch die Passagiere.

Insbesondere wird in dem Fahrzeug 1 das gemeinsame Display 6 verwendet, um bestimmte Fahrzeugfunktionen, insbesondere eine Multimediawiedergabeeinrichtung, zentral zu steuern. Insbesondere wird dazu eine durch das Display 6 ausgegebene graphische Bedienoberfläche verwendet, insbesondere in Kombination mit einer berührungsempfindlichen Oberfläche des Diaplays 6. Das Display 6 wird dann symbolisch als physischer Ort dieser Einrichtung des Fahrzeugs 1 behandelt, das heißt, der Ort des Displays 6 ist beim Senden von Daten an eine mittels des Displays 6 bedienbare Einrichtung eine Effekt-Position, die als Endpunkt der dargestellten Bewegung entlang der Lichtleiste 9 verwendet wird.

Bei dem in Figur 7A gezeigten Fall sendet ein Passagier auf dem linken hinteren Sitzplatz im Fahrzeug 1 Daten an das Display 6 beziehungsweise an eine Multimediawiedergabeeinrichtung, deren Ausgabe durch das Display 6 erfolgt. Die Pfeile 17 deuten an, dass entlang der Längserstreckung der LED-Leiste 9 ein Lichtpuls sich zum Display 6 mit der LED-Hintergrundbeleuchtung 6a hin bewegt, wobei der Lichtpuls von einer Position auf der LED-Leiste 9 nahe der Position des Sitzplatzes des sendenden Passagiers beginnt. Ferner leuchtet in dem Ausführungsbeispiel die LED 4 des Passagiers weiß auf.

In weiteren Ausführungsbeispielen kann sich die Lichtemission der LED-Leiste 9 auch in weiteren Bereichen verändern. Bei dem in Figur 7B dargestellten Fall sendet der Beifahrer Daten an das Display 6 beziehungsweise an die Medienwiedergabeeinrichtung, und die Bewegung eines Lichtpulses entlang der LED-Leiste 9 wird anhand der Pfeile 17 dargestellt. Die Bewegung geht von einem Ort auf der LED-Leiste nahe dem Beifahrer aus und verläuft nach hinten im Fahrzeug 1 und weiter bis zum Display 6. Insbesondere ist in dem Ausführungsbeispiel vorgesehen, dass ein solcher Effekt nicht für den Fahrer erzeugt wird, um eine Ablenkung zu vermeiden.

In weiteren Ausführungsbeispielen kann der mit Bezug zu den Figuren 7A und 7B dargestellte dynamische Lichteffekt auch bei Eingaben erzeugt werden, etwa wenn ein Nutzer eine Einstellung für eine Einrichtung 11 des Fahrzeugs 1 vornimmt und dabei die Bewegung eines Befehls von dem Passagier hin zu der Einrichtung 11 dargestellt wird. Ferner kann dargestellt werden, wenn Daten von einem Nutzer im Fahrzeug 1 zu einem anderen Nutzer übertragen werden. Ferner kann auf diese Weise dargestellt werden, wenn Daten an einen Nutzer übertragen werden, beispielsweise von einer Einrichtung des Fahrzeugs 1.

Mit Bezug zu Figur 8 wird ein Ausführungsbeispiel einer Erkundung im Innenraum mittels Gesten erläutert.

Das Konzept sieht vor, dass ein Zeigen auf eine Einrichtung 11, in dem dargestellten Fall eine Kamera 11 oder einen Ausströmer 11, die Matrix im Dach aufleuchtet. Das Licht bewegt sich mit dem Finger und wird schwächer (beim Entfernen von dem aktiven Bereich) oder stärker (beim Annähern an den aktiven Bereich). Befindet sich die Hand des Passagiers im Gestenraum, kann die Kamera 11 ausgelöst werden beziehungsweise das Klima mit dem Ausströmer 11 eingestellt werden. Die Matrix zeigt die Interaktionsmöglichkeiten an, insbesondere durch Farben, Helligkeitsanpassung und/oder Bewegungen.

Diese Funktionalität der Ambientebeleuchtung wird durch die Passagiere getriggert.

Es wird dabei zunächst erfasst, dass ein Nutzer, im dargestellten Fall ein Passagier im hinteren Teil des Fahrzeugs 1, eine Erkundungsgeste ausführt. Dies ist in dem dargestellten Ausführungsbeispiel eine Zeigegeste, insbesondere mit der Hand beziehungsweise einem Finger des Nutzers, wobei der Nutzer mit der Hand in eine bestimmte Richtung im Innenraum des Fahrzeugs 1 zeigt. Die Erkundungsgeste wird erfasst und es wird eine Richtung der Erkundungsgeste ermittelt. Es wird bestimmt, ob sich die Erkundungsgeste an eine Einrichtung 11 des Fahrzeugs 1 richtet, insbesondere in Richtung der anhand der umgebenden LED-Matrizen 7, 8 in Figur 8 dargestellten Einrichtungen 11, hier eine Kamera oder ein Ausströmer, annähert. Dabei ist ein aktiver Bereich in einer Umgebung der Einrichtungen 11 definiert, in dem Bediengesten erfasst werden können und der als Gestenraum zur Ausführung einer Geste zum Steuern der Einrichtung 11 dient.

Nähert sich der Finger des Nutzers dem Gestenraum einer Einrichtung 11 an, so wird dies durch einen dynamischen Lichteffekt der zugehörigen LED-Matrix 7, 8 signalisiert. Zum Beispiel kann dies durch eine Veränderung der Helligkeit einer Lichtemission der LED-Matrix 7, 8 erfolgen, wobei die Intensität der Lichtemission mit zunehmender Annäherung wächst. Der Nutzer kann so leicht erfassen, wenn er sich mit der Hand dem Gestenraum, in welchem eine Gestenbedienung möglich ist, annähert. Ferner kann die Matrix 7, 8 verschiedene Interaktionsmöglichkeiten anzeigen, etwa mittels Farben, einer Intensität und/oder einer Bewegung beziehungsweise eines dynamischen Lichteffekts. Beispielsweise kann signalisiert werden, dass der Nutzer eine Geste mit einer Bewegung in eine Richtung ausführen kann, um die zur jeweiligen LED-Matrix 7, 8 gehörige Einrichtung 11 zu steuern. Beispielsweise kann dabei eine LED-Matrix mit verschiedenen Beleuchtungseinheiten 12, 13, 14, wie oben mit Bezug zu Figur 2B erläutert, verwendet werden.

In weiteren Ausführungsbeispielen können auch weitere Elemente der Ambientebeleuchtung für die Erkundung mittels Gesten genutzt werden, insbesondere die LED-Leiste 9.

Mit Bezug zu Figur 9 wird ein Ausführungsbeispiel einer Gesteninteraktion in dem Fahrzeug 1, hier einem Einstellen des Klimas, erläutert.

Das Konzept sieht dabei vor, dass eine LED-Matrix 8 im Dach auf eine Zeigebewegung eines Passagiers reagiert. Es wird durch die LED-Matrix 8 des Ausströmers 11 ein Feedback gegeben, wenn der Passagier mit seiner Hand im Gestenraum ist und die Klimaanlage eingestellt werden kann. Das Licht der LED-Matrix 8 im Dach gibt ferner ein Feedback über den Status und zeigt die Einstellmöglichkeiten an. Ferner kann vorgesehen sein, dass der persönliche Spot 5 des agierenden Passagiers in Weiß aufleuchtet.

Die beschriebene Funktionalität wird durch die Passagiere getriggert.

Die Gesteninteraktion, beziehungsweise Gestenbedienung der Klimaanlage bzw. des Ausströmers 11, kann nach an sich bekannter Art erfolgen. Zum Beispiel kann eine Bediengeste des Nutzers eine Bewegung der Hand in eine bestimmte Richtung umfassen. Ferner kann eine Zeigegeste in eine bestimmte Richtung erfasst und ausgewertet werden. Zum Beispiel kann auf diese Weise eine Intensität, Temperatur und/oder Richtung eines einströmenden Luftstroms gesteuert werden.

Das Feedback der LED-Matrix 8 des Ausströmers 11 kann auf verschiedene Art erfolgen, insbesondere um dem Nutzer zu signalisieren, wenn sich seine Hand im Gestenraum befindet und andererseits zu signalisieren, welche Einstellmöglichkeiten vorliegen. Zum Beispiel kann die Intensität einer von der LED-Matrix 8 erzeugten Lichtemission verändert werden in Abhängigkeit von dem Abstand der Hand des Nutzers zum Gestenraum in der Umgebung des Ausströmers 11. Wenn sich die Hand des Nutzers im Gestenraum befindet, kann zum Beispiel mittels eines dynamischen Lichteffekts angezeigt werden, welche Bedienmöglichkeiten vorliegen, beispielsweise in welche Richtung eine Geste ausgeführt werden kann.

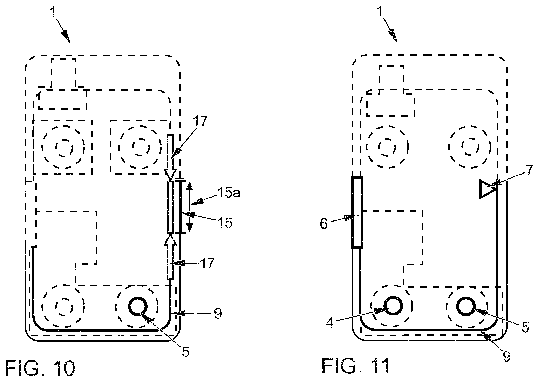

Mit Bezug zu Figur 10 wird ein Ausführungsbeispiel einer Gesteninteraktion in dem Fahrzeug 1, in diesem Fall ein Öffnen und Schließen einer Tür 15, erläutert.

Dabei sieht das Konzept vor, dass der Passagier mit einer Geste auf die Tür 15 zeigt, die Lichtleiste 9 anzeigt, dass die Türgeste erkannt wurde und welche Geste möglich ist. Beim Öffnen und Schließen der Tür 15 gibt die Lichtleiste 9 ein Feedback.

Dabei kann vorgesehen sein, dass der persönliche Spot 5 des agierenden Passagiers weiß aufleuchtet.

Die Funktionalität der Ambientebeleuchtung wird durch die Passagiere getriggert.

Bei dem in Figur 10 gezeigten Beispiel zeigt ein Nutzer, der sich auf der Position des rechts hinten sitzenden Passagiers befindet, auf die Tür 15, die eine Schiebetür 15 ist. Dabei gibt der Doppelpfeil 15a die möglichen Bewegungsrichtungen der Tür 15 an. Durch die Ambientebeleuchtung, im dargestellten Fall mittels der Lichtleiste 9, wird dem Nutzer angezeigt, dass sein Zeigen auf die Tür 15 erkannt wurde, indem Bedienmöglichkeiten angezeigt werden. Dazu wird ein dynamischer Lichteffekt erzeugt, der eine Bewegung entlang der Lichtleiste 9 in die Richtungen der Pfeile 17 umfasst. Zum Beispiel werden Lichtpulse in der Umgebung der Tür 15 erzeugt, die auf die Tür zulaufen oder von ihr weglaufen, um eine Geste in eine der Richtungen der Bewegungsrichtung 15a der Tür 15 anzudeuten. Zum Beispiel kann vorgesehen sein, dass der Nutzer durch eine Bewegung in Richtung der Verschiebung der Tür 15 zum Öffnen eine entsprechende tatsächliche Bewegung der Tür 15 auslöst, während eine Bewegung der Geste in die entgegengesetzte Richtung zum Schließen der Tür 15 führt.

Dabei kann vorgesehen sein, dass der persönliche Spot 5 oberhalb des in dem Ausführungsbeispiel handelnden Passagiers aufleuchtet, insbesondere mit einer weißen Farbe.

Mit Bezug zu Figur 11 wird ein Ausführungsbeispiel einer Aufnahme eines Stimmungsbilds mittels Tablet-Computer erläutert.

Das Konzept sieht vor, dass beim Auslösen der Kamera 11 die Lichtleiste 9 bei der Kamera 11 aufleuchtet und dass die LED-Matrix 7 im Umfeld der Kamera 11 aufleuchtet. Ferner wird ein Verlauf zum Display 6 mit der LED-Hintergrundbeleuchtung 6a hin dargestellt. Dabei leuchten am Ende der dargestellten Bewegung die LEDs der LED-Hintergrundbeleuchtung 6a des Displays 6 auf. Es kann ferner vorgesehen sein, dass die Spots 4, 5 der Passagiere farbig aufleuchten.

Die Funktionalität wird durch die Passagiere getriggert.

Bei diesem Ausführungsbeispiel ist vorgesehen, dass mittels der Kamera 11 im Innenraum des Fahrzeugs 1 ein Bild aufgenommen wird. In weiteren Ausführungsbeispielen kann dies auch ein Video sein und/oder es können Audiodaten erfasst werden. Die Aufnahme dieses Bildes wird in dem Ausführungsbeispiel *"Emotion Capture"* genannt.

Es ist vorgesehen, dass die Aufnahme mittels eines Nutzergeräts, insbesondere eines Tablet-Computers oder eines Mobiltelefons eines Passagiers, ausgelöst wird. In weiteren Ausführungsbeispielen kann das Ausführen mittels einer Gestensteuerung oder einer anderen Steuerung erfolgen.

Es wird mittels der Kamera 11 ein Bild aufgenommen und die Daten werden über das Fahrzeugnetzwerk verschickt, wobei in dem Ausführungsbeispiel als symbolische Zielposition die Position des Displays 6 im Fahrzeug 1 dargestellt wird. Zur Verdeutlichung der gesendeten Daten wird ein dynamischer Lichteffekt entlang der LED-Leiste 9 so erzeugt, dass eine Bewegung von einem Bereich nahe der Kamera 11 beziehungsweise nahe der LED-Matrix 7 hin zum Display 6 dargestellt wird. Zum Beispiel wird dabei ein bewegter Lichtpuls dargestellt, der sich entlang der Längsausdehnung der LED-Leiste 9 bewegt.

Dabei kann vorgesehen sein, dass die Spots 4, 5 oberhalb der Passagierplätze in den Farben aufleuchten, die den Passagieren zugeordnet sind.

In weiteren Ausführungsbeispielen kann vorgesehen sein, dass eine Übertragung des aufgenommenen Bildes an Nutzergeräte der Passagiere erfolgt. In diesem Fall kann eine entsprechende Bewegung eines Lichtpulses oder einer anderen Verdeutlichung der Datenübertragung von der Kamera zu den Positionen der Passagiere beziehungsweise zu Positionen in der Nähe der Passagier entlang der LED-Leiste 9 dargestellt werden. Ferner kann eine Datenübertragung von dem Display 6 hin zu den Positionen der Passagiere erfolgen, wenn Daten von dem Fahrzeug zum Beispiel an Mobilgeräte der Passagiere übertragen werden.

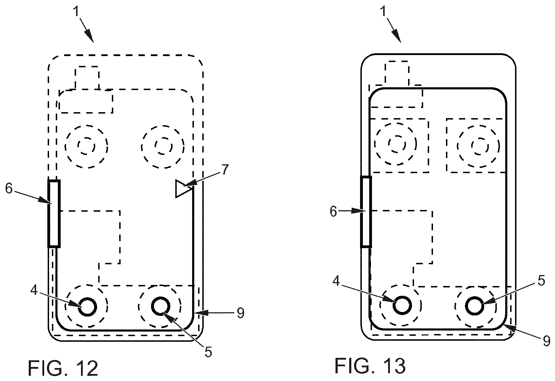

Mit Bezug zu Figur 12 wird ein Ausführungsbeispiel einer Gesteninteraktion in dem Fahrzeug 1, hier eine Aufnahme eines Stimmungsbildes *(Emotion Capture)* erläutert.

Das Konzept sieht vor, dass beim Zeigen auf die Kamera 11 die LED-Matrix 7 im Dach, insbesondere in der Umgebung der Kamera 11 aufleuchtet. Befindet sich die Hand des Passagiers im Gestenraum, kann die Kamera 11 ausgelöst werden und die LED-Matrix 7 zeigt die Interaktionsmöglichkeiten an. Beim Auslösen der Kamera leuchtet die Lichtleiste 9 und die LED-Matrix 7 der Kamera 11 auf und es wird ein Verlauf zur LED-Hintergrundbeleuchtung 6a des Displays 6 dargestellt. Dabei leuchten die LEDs der LED-Hintergrundbeleuchtung 6a hinter dem Display 6 auf.

Dabei kann vorgesehen sein, dass die persönlichen Spots 4, 5 der Passagiere farbig aufleuchten. Die Funktionalität wird durch die Passagiere getriggert.

Analog zu der oben beschriebenen Gestenbedienung kann auch eine Auslösung der Kamera 11 und eine Aufnahme eines Stimmungsbildes mittels der Kamera 11 erfolgen. Dabei signalisiert die LED-Matrix 7 eine Annäherung des Nutzers mit seiner Hand an den Gestenraum der Kamera 11, etwa durch eine mit wachsender Annäherung zunehmende Intensität. Erreicht die Hand des Nutzers den Gestenraum, so werden mithilfe der LED-Matrix 7 mögliche Gesten zur Bedienung angezeigt, beispielsweise eine Bewegung in eine bestimmte Richtung, durch welche die Kamera 11 ausgelöst wird. Beim Auslösen der Kamera 11 oder in einem bestimmten Zeitablauf vor und nach dem Auslösen der Kamera leuchtet die LED-Matrix 7 der Kamera 11, wobei ein dynamischer Lichteffekt dargestellt werden kann. Nach der Aufnahme wird die Übertragung der Daten zu dem Display 6, welcher symbolisch als physischer Ort des Rechners im Fahrzeug 1 behandelt wird, mittels eines dynamischen Lichteffekts dargestellt, etwa mittels eines von dem Bereich der Kamera 11 entlang der Lichtleiste 9 laufenden Lichtpulses hin zum Display 6. Erreicht der Lichtpuls das Display 6, so wird dies durch Aufleuchten der LED-Hintergrundbeleuchtung 6a dargestellt.

Mit Bezug zu Figur 13 wird ein Ausführungsbeispiel einer Steuerung der Ambientebeleuchtung beim Erreichen eines Ziels sowie einer automatischen Anpassung der Ambientebeleuchtung an die Umgebung erläutert.

Dabei soll das Erreichen eines Ziels (*Point of Interest,* POI, Sonderziel) beziehungsweise eine automatische Anpassung der Ambientebeleuchtung an eine Umgebung und/oder Landschaft in der Umgebung des Fahrzeugs 1 erreicht werden.

Das Konzept sieht vor, dass Passagiere durch ein langsames Aufhellen der LED-Leiste 9 beziehungsweise durch eine automatische Anpassung der Ambientebeleuchtung an die Umgebung oder Landschaft aktiviert werden. Gegebenenfalls können Spots 4, 5 der Passagiere langsam in der den Passagieren zugeordneten jeweiligen Farbe aktiviert werden. Auf diese Weise wird signalisiert, dass sich das Fahrzeug 1 an einen Passagier wendet und dem Passagier beispielsweise signalisiert wird, dass er hier aussteigen muss. Ferner zeigt das Display 6 das Ziel an, wobei die LEDs der LED-Hintergrundbeleuchtung 6a aufleuchten.

Diese Funktionalität wird durch das Fahrzeug getriggert.

Insbesondere kann vorgesehen sein, dass von einem Navigationssystem oder einer anderen geeigneten Einrichtung des Fahrzeugs erkannt wird, wenn sich das Fahrzeug 1 an ein Ziel annähert, das zuvor definiert wurde. Beispielsweise kann für einen bestimmten Passagier ein bestimmtes Ziel definiert sein. Nähert sich das Fahrzeug 1 dem Ziel, so kann die Ambientebeleuchtung so verändert werden, dass der Passagier auf die Annäherung hingewiesen wird. Dabei kann insbesondere berücksichtigt werden, wenn das Fahrzeug sich dem Ziel auf eine bestimmte Entfernung genähert hat oder es kann die verbleibende Reisezeit bis zu dem Ziel berücksichtigt werden. Durch die Ambientebeleuchtung kann zum Beispiel ein Aufwecken des Passagiers erfolgen. Dies erfolgt insbesondere durch einen dynamischen Lichteffekt, bei dem die Ambientebeleuchtung verändert wird, zum Beispiel mittels einer Erhöhung der Intensität, einer Veränderung der Stimmung, beispielsweise durch eine andere Geschwindigkeit oder Frequenz einer dargestellten Bewegung, durch Einschalten beziehungsweise Erhöhen der Intensität eines persönlichen Spots 4, 5, der dem jeweiligen Passagier zugeordnet ist, und weitere Lichteffekte, die mittels der Ambientebeleuchtung darstellbar sind. Ferner kann durch das Display 6 eine Nachricht ausgegeben werden, die den Passagier auf die Annäherung an das Ziel hinweist. Ferner können beispielsweise Informationen über das Ziel ausgegeben werden, etwa mittels eines Bildes und/oder mittels Textinformationen.

Ferner kann vorgesehen sein, dass bei der Annäherung des Ziels eine Anpassung der Ambientebeleuchtung an die Umgebung des Fahrzeugs 1 erfolgt, beispielsweise kann auf diese Weise ein Passagier auf die draußen herrschenden Lichtverhältnisse eingestimmt werden.

Insbesondere kann die Ambientebeleuchtung so gesteuert werden, dass der gesamte Innenraum des Fahrzeugs 1 oder dass lediglich bestimmte Bereiche des Innenraums betroffen sind, insbesondere kann die Wirkung der Funktionalität auf den für einen einzelnen Passagier besonders gut wahrnehmbaren Bereich beschränkt werden.

### Bezugszeichenliste

- 1: Fahrzeug
- 2: Spot "Fahrer"
- 3: Spot "Beifahrer"
- 4, 5: Spots "Passagiere"
- 6: Gemeinsames Display mit
- 6a: LED-Hintergrundbeleuchtung
- 7: LED-Matrix "Kamera"
- 8: LED-Matrix "Ausströmer"
- 9: Beleuchtungseinrichtung; Lichtleiste; LED-Leiste direkt und indirekt
- 9a: Leuchtsegmente
- 10: Dachhimmel
- 11: Einrichtung; Kamera; Ausströmer
- 12: LED-Leiste Dach
- 13: LED-Matrix fein
- 14: LED-Matrix grob
- 15: Tür; Schiebetür
- 15a: Pfeil Türbewegung
- 16: Kombiinstrument
- 17: Pfeile Bewegung Lichteffekt
- 20: Erfassungseinheit
- 20a: Sitzmatte
- 20b: Türsensor
- 20c: Netzwerkschnittstelle
- 21: Steuereinheit

## Patentansprüche

1. Verfahren zum Steuern einer Innenraumbeleuchtung in einem Fahrzeug (1), bei dem
eine Interaktion eines Nutzers mit einer Einrichtung (6, 11, 15, 16, 20a, 20b, 20c) des Fahrzeugs (1) erfasst wird; und
anhand der erfassten Interaktion ein Steuersignal erzeugt und an zumindest eine längliche Beleuchtungseinrichtung (9) mit einer Vielzahl von Leuchtsegmenten (9a) übertragen wird; sodass
ein dynamischer Lichteffekt erzeugt wird, wobei eine zeitlich veränderliche Verteilung eines Beleuchtungsparameters der Leuchtsegmente (9a) erzeugt wird,
**dadurch gekennzeichnet, dass**
der dynamische Lichteffekt eine Inhomogenität der Verteilung des Beleuchtungsparameters der Leuchtsegmente (9a) umfasst, wobei der Inhomogenität zumindest ein Ort im Fahrzeug (1) zugeordnet ist,
anhand der erfassten Interaktion zumindest eine Effekt-Position im Fahrzeug (1) bestimmt wird,
wenn die Interaktion ferner zumindest eine weitere Einrichtung (6, 11, 15, 16, 20a, 20b, 20c) des Fahrzeugs (1) betrifft, anhand der weiteren Einrichtung (6, 11, 15, 16, 20a, 20b, 20c) eine weitere Effekt-Position bestimmt wird und
der erzeugte dynamische Lichteffekt eine gerichtete Bewegung der Inhomogenität entlang einer Längserstreckung der Beleuchtungseinrichtung (9) bezüglich der Effekt-Position umfasst,
wobei die gerichtete Bewegung eines Lichtimpulses von der Effekt-Position zu der weiteren Effekt-Position verläuft.

2. Verfahren gemäß Anspruch 1,
**dadurch gekennzeichnet, dass**
die Einrichtung (6, 11, 15, 16, 20a, 20b, 20c) des Fahrzeugs (1) einen Einstiegssensor, eine Identifikationsvorrichtung, eine Eingabeeinheit, eine Kamera, eine Belüftungseinheit, eine Anzeigeeinheit (6, 16) oder eine Netzwerkschnittstelle umfasst.

3. Verfahren gemäß Anspruch 1 oder 2,
**dadurch gekennzeichnet, dass**
die Effekt-Position anhand der Einrichtung (6, 11, 15, 16, 20a, 20b, 20c) bestimmt wird, mit welcher die Interaktion des Nutzers erfasst wurde.

4. Verfahren gemäß einem der vorhergehenden Ansprüche,
**dadurch gekennzeichnet, dass**
die gerichtete Bewegung eine von der Effekt-Position ausgehende, räumliche Ausbreitung des Beleuchtungsparameters entlang der Längserstreckung der Beleuchtungseinrichtung (9) umfasst.

5. Verfahren gemäß einem der vorhergehenden Ansprüche,
**dadurch gekennzeichnet, dass**
dem Nutzer ein Farbstil zugeordnet wird und
der dynamische Lichteffekt ferner in Abhängigkeit von dem Farbstil des Nutzers erzeugt wird.

6. Verfahren gemäß Anspruch 5,
**dadurch gekennzeichnet, dass**
ferner anhand des Farbstils eine Sitzplatzbeleuchtung erzeugt wird, wobei die Sitzplatzbeleuchtung einem Sitzplatz des Nutzers zugeordnet ist.

7. System zum Steuern einer Innenraumbeleuchtung in einem Fahrzeug (1) mit
zumindest einer länglichen Beleuchtungseinrichtung (9) mit einer Vielzahl von Leuchtsegmenten (9a);
einer Erfassungseinheit, durch die eine Interaktion eines Nutzers mit einer Einrichtung (6, 11, 15, 16, 20a, 20b, 20c) des Fahrzeugs (1) erfassbar ist; und
einer Steuereinheit, durch die anhand der erfassten Interaktion ein Steuersignal erzeugbar und an die zumindest eine längliche Beleuchtungseinrichtung (9) übertragbar ist; sodass
ein dynamischer Lichteffekt erzeugbar ist, wobei eine zeitlich veränderliche Verteilung eines Beleuchtungsparameters der Leuchtsegmente (9a) erzeugbar ist,
**dadurch gekennzeichnet, dass**
der dynamische Lichteffekt eine Inhomogenität der Verteilung des Beleuchtungsparameters der Leuchtsegmente (9a) umfasst, wobei der Inhomogenität zumindest ein Ort im Fahrzeug (1) zugeordnet ist,
anhand der erfassten Interaktion zumindest eine Effekt-Position im Fahrzeug (1) bestimmbar ist,
wenn die Interaktion ferner zumindest eine weitere Einrichtung (6, 11, 15, 16, 20a, 20b, 20c) des Fahrzeugs (1) betrifft, anhand der weiteren Einrichtung (6, 11, 15, 16, 20a, 20b, 20c) eine weitere Effekt-Position bestimmbar ist und
der erzeugte dynamische Lichteffekt eine gerichtete Bewegung der Inhomogenität entlang einer Längserstreckung der Beleuchtungseinrichtung (9) bezüglich der Effekt-Position umfasst,
wobei die gerichtete Bewegung eines Lichtimpulses von der Effekt-Position zu der weiteren Effekt-Position verläuft.

## Claims

1. Method for controlling interior lighting in a vehicle (1), in which method an interaction of a user with a device (6, 11, 15, 16, 20a, 20b, 20c) of the vehicle (1) is detected; and
on the basis of the detected interaction, a control signal is generated and transmitted to at least one elongate lighting device (9) comprising a plurality of light segments (9a), such that
a dynamic light effect is generated, with a temporally variable distribution of a lighting parameter of the light segments (9a) being generated,
**characterized in that**
the dynamic light effect comprises an inhomogeneity of the distribution of the lighting parameter of the light segments (9a), with at least one location in the vehicle (1) being assigned to the inhomogeneity,
at least one effect position in the vehicle (1) is determined on the basis of the detected interaction,
if the interaction further relates to at least one further device (6, 11, 15, 16, 20a, 20b, 20c) of the vehicle (1), a further effect position is determined on the basis of the further device (6, 11, 15, 16, 20a, 20b, 20c), and
the generated dynamic light effect comprises a directed movement of the inhomogeneity
along a longitudinal extent of the lighting device (9) with respect to the effect position,
the directed movement of a light pulse extending from the effect position to the further effect position.

2. Method according to claim 1,
**characterized in that**
the device (6, 11, 15, 16, 20a, 20b, 20c) of the vehicle (1) comprises an entry sensor, an identification apparatus, an input unit, a camera, a ventilation unit, a display unit (6, 16) or a network interface.

3. Method according to either claim 1 or claim 2,
**characterized in that**
the effect position is determined on the basis of the device (6, 11, 15, 16, 20a, 20b, 20c) with which of the user was detected as having the interaction.

4. Method according to any of the preceding claims,
**characterized in that**
the directed movement comprises a spatial propagation, starting from the effect position, of the lighting parameter along the longitudinal extent of the lighting device (9).

5. Method according to any of the preceding claims,
**characterized in that**
a color style is assigned to the user, and
the dynamic light effect is also generated according to the color style of the user.

6. Method according to claim 5,
**characterized in that**
seat lighting is also generated on the basis of the color style, the seat lighting being assigned to a seat of the user.

7. System for controlling interior lighting in a vehicle (1), comprising
at least one elongate lighting device (9) that comprises a plurality of light segments (9a);
a detection unit, by means of which an interaction of a user with a device (6, 11, 15, 16, 20a, 20b, 20c) of the vehicle (1) can be detected; and
a control unit, by means of which, on the basis of the detected interaction, a control signal can be generated and can be transmitted to the at least one elongate lighting device (9), such that
a dynamic light effect can be generated, it being possible for a temporally variable distribution of a lighting parameter of the light segments (9a) to be generated,
**characterized in that**
the dynamic light effect comprises an inhomogeneity of the distribution of the lighting parameter of the light segments (9a), with at least one location in the vehicle (1) being assigned to the inhomogeneity,
at least one effect position in the vehicle (1) can be determined on the basis of the detected interaction,
if the interaction further relates to at least one further device (6, 11, 15, 16, 20a, 20b, 20c) of the vehicle (1), a further effect position can be determined on the basis of the further device (6, 11, 15, 16, 20a, 20b, 20c), and
the generated dynamic light effect comprises a directed movement of the inhomogeneity along a longitudinal extent of the lighting device (9) with respect to the effect position,
the directed movement of a light pulse extending from the effect position to the further effect position.

## Revendications

1. Procédé permettant la commande d'un éclairage d'habitacle dans un véhicule (1), dans lequel une interaction d'un utilisateur avec un appareil (6, 11, 15, 16, 20a, 20b, 20c) du véhicule (1) est détectée ; et
au moyen de l'interaction détectée, un signal de commande est généré et transmis à au moins un appareil d'éclairage allongé (9) comportant une pluralité de segments lumineux (9a) ; de sorte que
un effet de lumière dynamique est généré, dans lequel une distribution variable dans le temps d'un paramètre d'éclairage des segments lumineux (9a) est générée,
**caractérisé en ce que**
l'effet de lumière dynamique comprend une hétérogénéité de la distribution du paramètre d'éclairage des segments lumineux (9a), dans lequel au moins un emplacement dans le véhicule (1) est associé à l'hétérogénéité,
au moins une position d'effet dans le véhicule (1) est déterminée au moyen de l'interaction détectée,
lorsque l'interaction concerne en outre au moins un autre appareil (6, 11, 15, 16, 20a, 20b, 20c) du véhicule (1), une autre position d'effet est déterminée au moyen de l'autre appareil (6, 11, 15, 16, 20a, 20b, 20c) et
l'effet de lumière dynamique généré comprend un mouvement dirigé de l'hétérogénéité
le long d'une étendue longitudinale de l'appareil d'éclairage (9) par rapport à la position d'effet,
dans lequel le mouvement dirigé d'une impulsion de lumière s'étend de la position d'effet à l'autre position d'effet.

2. Procédé selon la revendication 1,
**caractérisé en ce que**
l'appareil (6, 11, 15, 16, 20a, 20b, 20c) du véhicule (1) comprend un capteur d'accès, un dispositif d'identification, une unité d'entrée, une caméra, une unité de ventilation, une unité d'affichage (6, 16) ou une interface réseau.

3. Procédé selon la revendication 1 ou 2,
**caractérisé en ce que**
la position d'effet est déterminée au moyen de l'appareil (6, 11, 15, 16, 20a, 20b, 20c) avec lequel l'interaction de l'utilisateur a été détectée.

4. Procédé selon l'une quelconque des revendications précédentes,
**caractérisé en ce que**
le mouvement dirigé comprend une extension spatiale du paramètre d'éclairage à partir de la position d'effet le long de l'étendue longitudinale de l'appareil d'éclairage (9).

5. Procédé selon l'une quelconque des revendications précédentes,
**caractérisé en ce que**
un style de couleur est associé à l'utilisateur et
l'effet de lumière dynamique est en outre généré en fonction du style de couleur de l'utilisateur.

6. Procédé selon la revendication 5,
**caractérisé en ce que**
un éclairage de siège est en outre généré au moyen du style de couleur, dans lequel l'éclairage de siège est associé à un siège de l'utilisateur.

7. Système permettant la commande d'un éclairage d'habitacle dans un véhicule (1) comportant
au moins un appareil d'éclairage allongé (9) comportant une pluralité de segments lumineux (9a) ;
une unité de détection avec laquelle une interaction d'un utilisateur avec un appareil (6, 11, 15, 16, 20a, 20b, 20c) du véhicule (1) peut être détectée ; et
une unité de commande avec laquelle un signal de commande peut être généré au moyen de l'interaction détectée et être transmis à l'au moins un appareil d'éclairage allongé (9) ; de sorte que
un effet de lumière dynamique peut être généré, dans lequel une distribution variable dans le temps d'un paramètre d'éclairage des segments lumineux (9a) peut être générée,
**caractérisé en ce que**
l'effet de lumière dynamique comprend une hétérogénéité de la distribution du paramètre d'éclairage des segments lumineux (9a), dans lequel au moins un emplacement dans le véhicule (1) est associé à l'hétérogénéité,
au moins une position d'effet dans le véhicule (1) peut être déterminée au moyen de l'interaction détectée,
lorsque l'interaction concerne en outre au moins un autre appareil (6, 11, 15, 16, 20a, 20b, 20c) du véhicule (1), une autre position d'effet peut être déterminée à l'aide de l'autre appareil (6, 11, 15, 16, 20a, 20b, 20c) et
l'effet de lumière dynamique généré comprend un mouvement dirigé de l'hétérogénéité le long d'une étendue longitudinale de l'appareil d'éclairage (9) par rapport à la position d'effet,
dans lequel le mouvement dirigé d'une impulsion de lumière s'étend de la position d'effet à l'autre position d'effet.
